# EUROPÄISCHE PATENTANMELDUNG

(11) **EP 2 445 069 A1**
(43) Veröffentlichungstag der Anmeldung: **25.04.2012**
(21) Anmeldenummer: 11186055.7
(22) Anmeldetag: 21.10.2011
(51) Int. Cl.: H02G 3/04, H02G 3/06, H02G 3/10, H02G 3/38

(54) **Eckprofilsystem**

(30) Priorität: 21.10.2010 AT 17532010
(71) Anmelder: Karl Pedross AG, 39021 Latsch/Laces (BZ) (IT)
(72) Erfinder: Egger, Werner, 39028 SCHLANDERS (IT); Kurz, Sebastian, 39023 LAAS/EYRS (IT)
(74) Vertreter: Babeluk, Michael

(57) **Zusammenfassung**

Die Erfindung betrifft ein Eckprofilsystem zur Gestaltung des Übergangs zwischen einer Wand (10) und dem Fußboden (11), mit einem Grundprofil (1) und einer vom Grundprofil (1) gehaltenen Deckleiste (2), wobei das Grundprofil (1) einen den Kabelführungskanal (3) aufnehmenden Basisbereich (4) aufweist, der im montierten Zustand des Grundprofils (1) unterhalb des Fertigbodenniveaus (5) angeordnet ist, sowie einen Halteabschnitt (7), der im montierten Zustand des Grundprofils (1) oberhalb des Fertigbodenniveaus (5) liegt und zur Befestigung der Deckleiste (2) ausgebildet ist. Erfindungsgemäß ist die Deckleiste (2) im montierten Zustand putzeben im Halteabschnitt (7) des Grundprofils (1) aufgenommen.

## Beschreibung

Die Erfindung betrifft ein Eckprofilsystem zur Gestaltung des Übergangs zwischen einer Wand und dem Fußboden, mit einem Grundprofil und einer vom Grundprofil gehaltenen Deckleiste, wobei das Grundprofil einen den Kabelführungskanal aufnehmenden Basisbereich aufweist, der im montierten Zustand des Grundprofils unterhalb des Fertigbodenniveaus angeordnet ist, sowie einen Halteabschnitt, der im montierten Zustand des Grundprofils oberhalb des Fertigbodenniveaus liegt und zur Befestigung der Deckleiste ausgebildet ist.

Es sind bereits Eckprofilsysteme bzw. Sockelleisten bekannt, die neben der Gestaltung des Übergangs zwischen dem Fußboden und der Wand auch zur Kabelführung verwendet werden. Der Aufnahmequerschnitt für Kabel ist allerdings meist begrenzt, da insbesondere im Wohnbereich Eckprofilsysteme bzw. Sockelleisten mit einem möglichst geringen Querschnitt bevorzugt werden. Durch die fortschreitende Entwicklung der Hauselektronik besteht jedoch der Wunsch größere Kanalquerschnitte zur Verfügung zu haben um die unterschiedlichsten Versorgungs- und Signalleitungen unterzubringen.

Aus der DE 20 2004 003 976 U1 ist in diesem Zusammenhang eine Sockelleiste bekannt, die aus einer Befestigungsleiste und einem einrastbaren Deckprofil besteht, wobei die Befestigungsleiste den Übergang zwischen Fertigboden und Verputz der Wand abschließt. Die Befestigungsleiste weist zwei nach oben offene Profilabschnitte auf, welche jeweils zur Aufnahme eines Kabels ausgebildet sind. In das Deckprofil kann ein Dachprofil unterschiedlicher Ausgestaltung lösbar eingesetzt werden.

Aus der DE 202 00 446 U1 ist ein Profilschienensystem bekannt, welches aus einer an der Wand befestigbaren Basisschiene mit L-förmigem Querschnitt mit einem horizontalen Schenkel zur Abdeckung der Randfuge und einem vertikalen Schenkel zur Wandbefestigung besteht. Auf die Basisschiene ist eine Sockelleiste aufsteckbar, wobei an der Basisschiene und an der Sockelleiste in einander einrastbare Stege angeformt sind. Einzelne der Stege der Basisschiene sind derart geformt, dass ein oder mehrere Kabelkanäle zur Aufnahme von elektrischen Leitungen ausgebildet sind.

Weiters ist aus der DE 195 16 277 A1 eine Sockelleiste bekannt, die als Kabelkanal zur Aufnahme elektrischer Vorrichtungen (wie Stecker etc.) ausgebildet ist und aus einem an der Wand befestigbaren Grundprofil besteht, welches mehrere Aufnahmen zur Führung von Kabeln aufweist, die durch längslaufende Trennwände unterteilt sind. In einem mittleren Kanal können die elektrischen Einbauten befestigt werden. Der Kabelkanal ist sehr voluminös ausgeführt und genügt daher nicht den ästhetischen Anforderungen im Wohnbereich.

Aus der EP 0 812 045 A1 ist ein Kabelkanal für Gebäudeinnenräume bekannt, der im Übergangsbereich zwischen Fußboden und Wand verlegt wird. In einer Ausführungsvariante weist der Kabelkanal ein Hohlprofil auf, das eine durchgehende Längsöffnung aufweist und in einem Bereich, der unterhalb des Fertigbodenniveaus liegt mit einem Aufnahmeraum für Kabel ausgestattet ist. Dieser Bereich weist auch eine horizontale Auflagefläche für den Fußboden auf. Eine Rückwand des Hohlprofils reicht über das Fußbodenniveau hinaus und weist eine Deckfläche auf, die derart bemessen ist, dass sie der Dicke des Wandputzes entspricht. An einem sich nach unten erstreckenden Wandabschnitt der Deckfläche wird eine die Längsöffnung des Hohlprofils abdeckende Fußbodenleiste mittels Holzschrauben befestigt. Nachteilig ist die Tatsache, dass die Positionierung von direkt an der Wand stehenden Möbeln bzw. Einrichtungsgegenständen nicht problemlos möglich ist, und Anpassungen der Fußbodenleiste bzw. der Einrichtungsgegenstände vorgenommen werden müssen.

Eine ähnliche Ausführungsvariante einer Eckprofilleiste wird auch in der DE 100 31 228 A1 gezeigt, aus welcher ebenfalls ein Eckprofilsystem bekannt ist, das ein Hohlprofil aufweist, dessen Kabelkanal unterhalb des Fertigbodenniveaus liegt. Die Längsöffnung des Hohlprofils wird hier durch eine L-förmige Deckleiste aus Kunststoff abgeschlossen, die mit einem Schenkel im Wesentlichen putzeben auf die Längsöffnung des Hohlprofils aufgesetzt wird. An der L-förmigen Deckleiste kann nun eine über die Putzebene vorstehende Hohlprofilleiste befestigt werden, die im Inneren einen Kabelaufnahmekanal aufweist. Die Befestigung erfolgt über ein System von parallel verlaufenden Profilrippen und komplementär dazu geformten Profilrinnen an den Kontaktflächen der Deckleiste und der Hohlprofilleiste. Das Profilsystem weist ebenfalls die bereits zur EP 0 812 045 A1 angeführten Nachteile auf.

Aufgabe der Erfindung ist es ein Eckprofilsystem zur Gestaltung des Übergangs zwischen einer Wand und dem Fußboden derart zu verbessern, dass ein möglichst großer Querschnitt zur Kabelführung zur Verfügung gestellt wird und trotzdem ein ästhetisches Erscheinungsbild gewährleistet ist, wobei die Positionierung von direkt an der Wand stehenden Möbeln problemlos möglich sein sollte.

Diese Aufgabe wird erfindungsgemäß dadurch gelöst, dass die Deckleiste im montierten Zustand putzeben im Halteabschnitt des Grundprofils aufgenommen ist. Es hat sich als vorteilhaft herausgestellt, dass die Deckleiste bzw. Sockelleiste putzeben in den Halteabschnitt des Grundprofils einsetzbar ist. Ein Anpassen der Sockelleisten an Einrichtungsgegenständen entfällt dadurch zur Gänze. Weiters können wesentliche Teile des Profilsystems unterhalb des Fertigbodenniveaus verlegt werden, so dass hier ausreichende Querschnitte für die Kabelführung zur Verfügung gestellt werden können. Dies gilt sowohl für den Übergangsbereich zwischen der Wand und dem Fußboden, jedoch in angepasster Weise auch für den Bereich zwischen Wand und Decke.

Gemäß einer Weiterbildung der Erfindung weist der Basisbereich des Grundprofils eine Auflage- oder Abzugleiste auf, die als Abzugleiste einer Unterbodenkonstruktion, beispielsweise einer Estrichschicht oder als Auflageleiste zur Auflage des Fertigbodens dient. Im Gegensatz zu vielen bekannten Profilsystemen kann das erfindungsgemäße System in der Ecke zwischen Rohbetonboden und unverputzter Wand montiert werden, wonach die Auflage- oder Abzugleiste, beispielsweise als Abzugkante für die Estrichschicht, verwendet werden kann.

Weiters weist der Halteabschnitt des Grundprofils erfindungsgemäß eine Abzugskante für eine Putzschicht auf, an welcher der Wandputz abgezogen werden kann.

Weitere erfindungsgemäße Vorteile des Eckprofilsystems werden in den nur beispielhaft dargestellten Ausführungsbeispielen erläutert. Es zeigen:

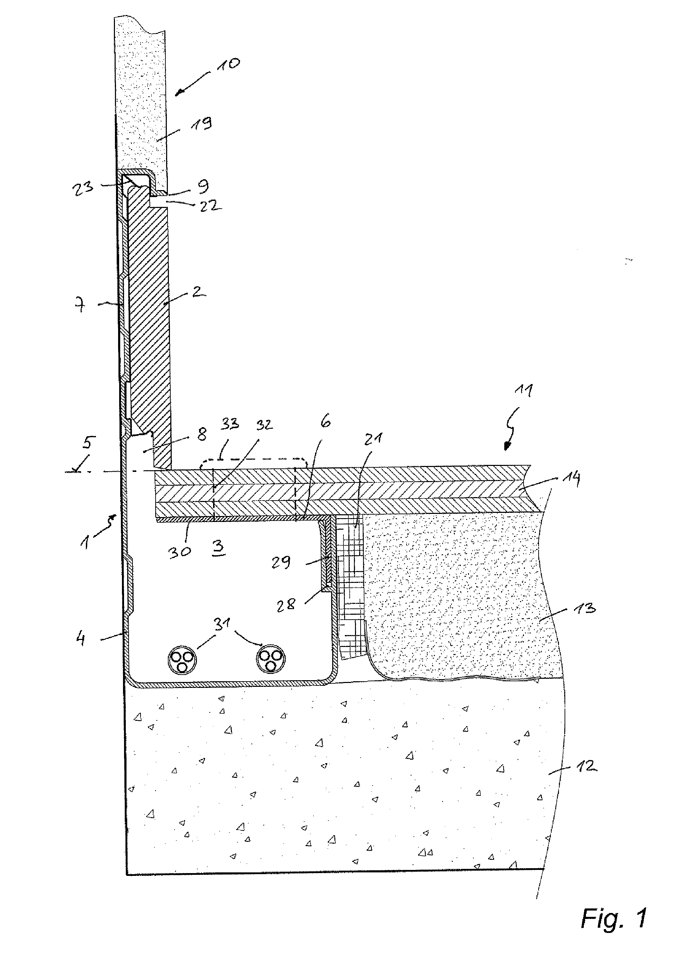

- Fig. 1: ein erfindungsgemäßes Eckprofilsystem zur Gestaltung des Übergangs zwischen einer Wand und dem Fußboden in einer Schnittdarstellung;
- Fig. 2: das Eckprofilsystem gemäß Fig. 1 in einem vorangehenden Montageschritt;
- Fig. 3: eine nicht erfindungsgemäße Anwendung des Eckprofilsystems in einer Schnittdarstellung gemäß Fig. 1;
- Fig. 4: eine Halteklammer des Eckprofilsystems gemäß Fig. 1 in einer dreidimensionalen Darstellung;
- Fig. 5: das Eckprofilsystem gemäß Fig. 1 samt Einbauten in einer dreidimensionalen Darstellung;
- Fig. 6: das Eckprofilsystem gemäß Fig. 5 ohne Einbauten, vor dem Aufbringen einer Estrichschicht;
- Fig. 7: ein Inneneckelement des Eckprofilsystems gemäß Fig. 6; sowie
- Fig. 8: ein Außeneckelement des Eckprofilsystems gemäß Fig. 6.

Das erfindungsgemäße Eckprofilsystem zur Gestaltung des Übergangs zwischen einer Wand 10 und dem Fußboden 11 besteht im Wesentlichen aus einem Grundprofil 1 und einer vom Grundprofil gehaltenen Deckleiste 2 (hier Sockelleiste), wobei im Grundprofil 1 zumindest ein Kabelführungskanal 3 ausgebildet ist.

Das Grundprofil 1 weist einen den Kabelkanal 3 aufnehmenden Basisbereich 4 auf, der im montierten Zustand des Grundprofils 1 unsichtbar unterhalb des Fertigbodenniveaus 5 liegt und daher mit einem entsprechend großen Querschnitt ausgestattet sein kann.

Im Dargestellten Beispiel besteht der Fußboden 11 bzw. dessen Aufbau aus dem Rohboden 12 (z.B. Betondecke), einer Estrichschicht 13 und einem das Fertigbodenniveau 5 bildenden Parkettboden 14. Durch die Verlagerung eines wesentlichen Teils des Profilquerschnitts des Grundprofils 1 unterhalb des Fertigbodenniveaus 5 steht ein großvolumiger Kabelführungskanal 3 zur Verfügung, welcher eine Vielzahl von Aufgaben im Bereich der Energieversorgung und Signalleitung im Wohn- bzw. Bürobereich übernehmen kann.

Der Basisbereich 4 des Grundprofils 1 weist eine Auflage- bzw. Abzugsleiste 6 auf, die als Abzugleiste einer Unterbodenkonstruktion, beispielsweise der Estrichschicht 13, dient. Zwischen dem Grundprofil 1 und der Estrichschicht 13 ist ein Dämmstreifen 21 angeordnet.

Weiters weist das Grundprofil 1 einen Halteabschnitt 7 auf, der im montierten Zustand des Grundprofils 1 oberhalb des Fertigbodenniveaus 5 liegt und zur putzebenen Aufnahme der Deckleiste 2 ausgebildet ist.

Im dargestellten Beispiel weist der Halteabschnitt 7 des Grundprofils 1 eine Abzugkante 9 für eine auf die Wand 10 aufzubringende Putzschicht 19 auf. Die Deckleiste 2 kann so ohne Probleme putzeben in den Halteabschnitt 7 des Grundprofils 1 eingesetzt werden, wobei im Bereich der Abzugskante 9 eine Schattenfuge 22 ausgebildet sein kann.

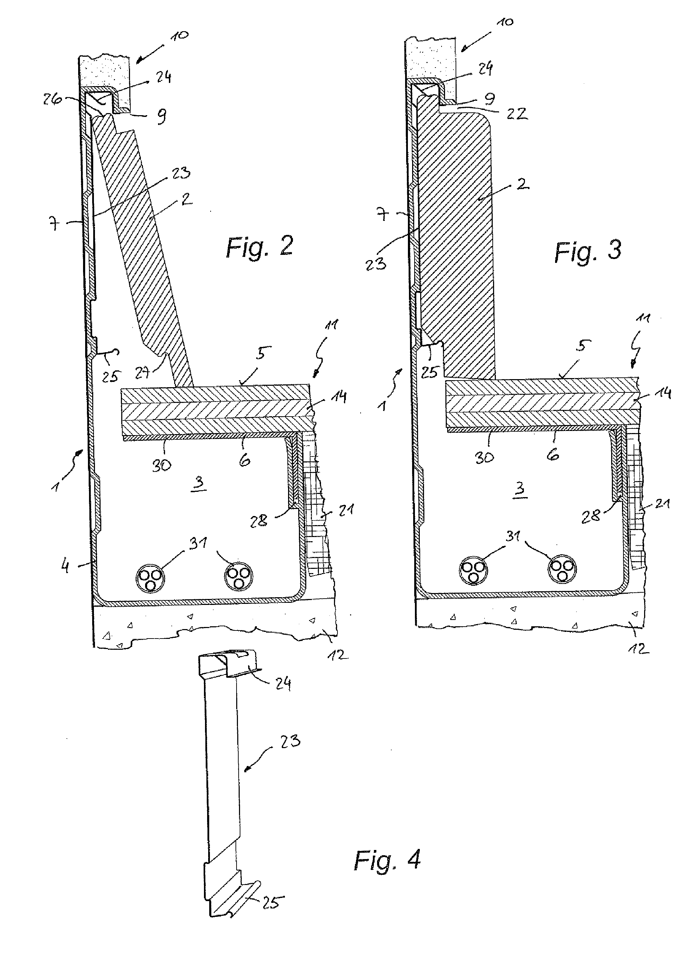

Zur Befestigung der Deckleiste bzw. Sockelleiste 2 ist eine in den Halteabschnitt 7 einschnappbare Halteklammer 23 (siehe Fig. 4) vorgesehen, die mit federnden Fortsätzen 24, 25 in entsprechende Längsnuten 26, 27 der Deckleiste 2 eingreift. Der entsprechende Montageschritt ist in Fig. 2 dargestellt.

Bei entsprechender Profilierung der Rückseite der Deckleiste 2, kann im Halteabschnitt 7 des Grundprofils 1 zumindest ein zusätzlicher Kabelkanal 8 angeordnet sein.

Nach der Montage liegt eine optisch ansprechende Lösung vor, wobei durch die putzebene Aufnahme der Sockelleiste im Halteabschnitt auch direkt an der Wand stehende Möbel problemlos positioniert werden können, ohne Anpassungen vornehmen zu müssen.

Bevorzugt ist die Auflage- bzw. Abzugleiste 6 als abnehmbarer Profilteil ausgeführt, welcher auf das Grundprofil 1 aufsteckbar oder aufsetzbar ist. Im dargestellten Beispiel weist dafür das Grundprofil 1 eine Längsnut 28 auf, in welche ein Halteschenkel 29 der Abzugsleiste 6 eingesteckt werden kann. Der abnehmbare Profilteil kann so zum Einbringen der Kabel 31 abgenommen werden, was die Kabelmontage wesentlich erleichtert.

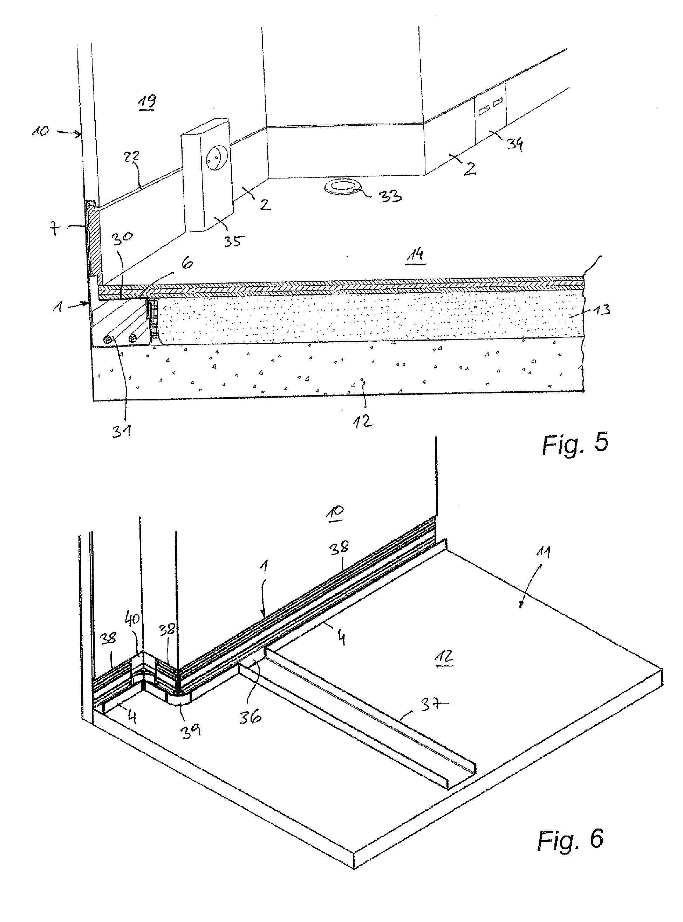

Erfindungsgemäß kann die Auflage- oder Abzugsleiste 6 einen zum Fertigboden 14 parallel verlaufenden Deckschenkel 30 aufweisen, welcher Ausnehmungen 32 zur Aufnahme von elektrischen Einbauten, wie Schalter, Stecker, Leuchtmittel 33 (siehe Fig. 5), etc. aufweist.

Weiters können erfindungsgemäß im Halteabschnitt 7 des Grundprofils 1 oder auf der im Halteabschnitt 7 befestigten Deckleiste 2 elektrischen Einbauten, wie Schalter 34, 35, Stecker, Leuchtmittel, etc. befestigt oder eingebaut sein (siehe Fig. 5).

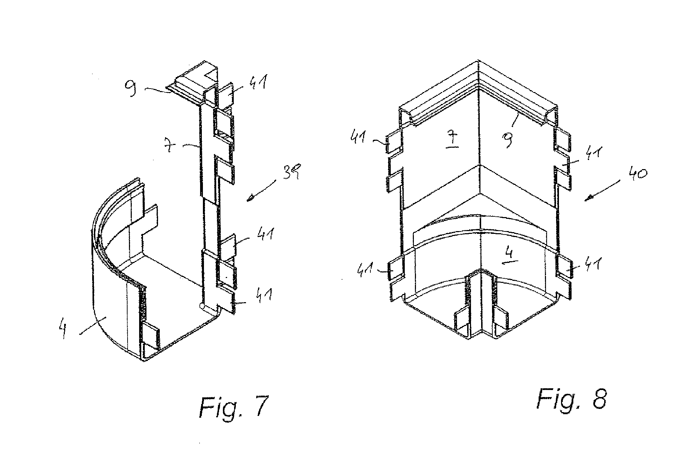

Wie in Fig. 6 dargestellt, können im Basisbereich 4 des Grundprofils 1 Anschlussstellen 36 für in der Bodenkonstruktion verlaufende Kabelkanäle 37 ausgebildet sein. Das Grundprofil 1 besteht dabei aus miteinander verbindbaren stangenförmigen Elementen 38 und Eckelementen 39, 40. Im Detail ist in Fig. 7 eine Innenecke 39 sowie in Fig. 8 eine Außenecke 40 dargestellt. An den Anschlussstellen der Eckelemente 39, 40 sind fingerartige Laschen 41 angeordnet, auf welche die stangenförmigen Elemente 38 aufgesteckt werden können.

## Patentansprüche

1. Eckprofilsystem zur Gestaltung des Übergangs zwischen einer Wand (10) und dem Fußboden (11), mit einem Grundprofil (1) und einer vom Grundprofil (1) gehaltenen Deckleiste (2), wobei das Grundprofil (1) einen den Kabelführungskanal (3) aufnehmenden Basisbereich (4) aufweist, der im montierten Zustand des Grundprofils (1) unterhalb des Fertigbodenniveaus (5) angeordnet ist, sowie einen Halteabschnitt (7), der im montierten Zustand des Grundprofils (1) oberhalb des Fertigbodenniveaus (5) liegt und zur Befestigung der Deckleiste (2) ausgebildet ist, **dadurch gekennzeichnet, dass** die Deckleiste (2) im montierten Zustand putzeben im Halteabschnitt (7) des Grundprofils (1) aufgenommen ist.

2. Eckprofilsystem nach Anspruch 1, **dadurch gekennzeichnet, dass** der Basisbereich (4) des Grundprofils (1) eine Auflage- oder Abzugleiste (6) aufweist, die als Abzugleiste einer Unterbodenkonstruktion, beispielsweise einer Estrichschicht (13), oder als Auflageleiste zur Auflage des Fertigbodens (14) dient.

3. Eckprofilsystem nach Anspruch 1 oder 2, **dadurch gekennzeichnet, dass** der Halteabschnitt (7) des Grundprofils (1) eine Abzugskante (9) für eine Putzschicht (19) aufweist.

4. Eckprofilsystem einem der Ansprüche 1 bis 3, **dadurch gekennzeichnet, dass** im Halteabschnitt (7) des Grundprofils (1) zumindest ein zusätzlicher Kabelkanal (8) angeordnet ist.

5. Eckprofilsystem nach Anspruch 2, **dadurch gekennzeichnet, dass** die Auflage- oder Abzugsleiste (6) als abnehmbarer Profilteil ausgeführt ist, welcher auf das Grundprofil (1) aufsteckbar oder aufsetzbar ist.

6. Eckprofilsystem nach einem der Ansprüche 1 bis 5, **dadurch gekennzeichnet, dass** im Basisbereich (4) des Grundprofils (1) Anschlussstellen (36) für in der Bodenkonstruktion verlaufende Kabelkanäle (37) ausgebildet sind.

7. Eckprofilsystem nach einem der Ansprüche 1 bis 6, **dadurch gekennzeichnet, dass** die Auflage- oder Abzugsleiste (6) einen zum Fertigboden (14) parallel verlaufenden Deckschenkel (30) aufweist, welcher Ausnehmungen (32) zur Aufnahme von elektrischen Einbauten, wie Schalter, Stecker, Leuchtmittel (33), etc. aufweist.

8. Eckprofilsystem nach einem der Ansprüche 1 bis 7, **dadurch gekennzeichnet, dass** im Halteabschnitt (7) des Grundprofils (1) oder auf der im Halteabschnitt befestigten Deckleiste (2) elektrische Einbauten, wie Schalter, Stecker (34,35), Leuchtmittel, etc. befestigt oder eingebaut sind.

9. Eckprofilsystem nach einem der Ansprüche 1 bis 8, **dadurch gekennzeichnet, dass** zur Befestigung der Deckleiste (2) in den Halteabschnitt (7) einschnappbare Halteklammern (23) vorgesehen ist, die mit federnden Fortsätzen (24, 25) in entsprechende Längsnuten (26, 27) der Deckleiste (2) eingreifen.

10. Eckprofilsystem nach einem der Ansprüche 1 bis 9, **dadurch gekennzeichnet, dass** das Grundprofil (1) aus miteinander verbindbaren stangenförmigen Elementen (38) und Eckelementen (39, 40) besteht.
